# EUROPEAN PATENT APPLICATION

(11) **EP 2 555 094 A2**
(43) Date of publication of application: **06.02.2013**
(21) Application number: 12170041.3
(22) Date of filing: 30.05.2012
(51) Int. Cl.: G06F 3/044

(54) **Touch control panel structure having a dummy pattern**

(30) Priority: 05.08.2011 TW 100128032
(71) Applicant: Fortrend Taiwan Scientific Corp., New Taipei City 244 (TW)
(72) Inventor: Chang, Chih-Shun, 244 New Taipei City (TW)
(74) Representative: Gee, Steven William

(57) **Abstract**

A touch control panel structure includes a substrate, a plurality of first transparent conductive regions, a plurality of first dummy patterns, an insulating layer, a plurality of second transparent conductive regions, a plurality of second dummy patterns, and an optical coating layer. The first transparent conductive regions and the first dummy patterns are disposed on the substrate and covered by the insulating layer. The second transparent conductive regions and the second dummy patterns are disposed on the insulating layer and covered by the optical coating layer. The first and second transparent conductive regions are respectively arranged in a first and a second direction. The first and second dummy patterns are respectively aligned with the corresponding second and first transparent conductive regions. The color difference is not visually perceptible when light is emitted upward from the bottom of the substrate, thereby improving the display image quality.

## Description

### BACKGROUND OF THE INVENTION

### 1. Field of the Invention

The present invention relates to a touch control panel, and more particularly to a touch control panel having a dummy pattern structure that can reduce the color difference.

### 2. The Prior Arts

The touch control panels have display function and are easily to be controlled. In recent years, the touch control panels are widely used in portable or fixed devices such as mobile phones, tablet computers, automated telling machines, automated vending machines, navigation devices, etc. In particular, because the capacitive touch control panel can provide multi-touch control, the resistive touch control panel is becoming increasingly replaced by the capacitive touch control panel.

Conventionally, the capacitive touch control panel includes two transparent conductive glass plates which sandwiches an optical gel. This capacitive touch control panel is then placed on a display device. A user can touch the surface of the touch control panel at a position corresponding to an image or icon to achieve touch control. The conductive glass plates or the conductive films, and the optical gel therebetween can be used as a capacitor to detect a touch position.

However, the disadvantage of the conventional touch control panel is that the specific patterns (such as lozenge shape) of the two conductive films, which can define the capacitor, formed by etching can exhibit a color difference, which may affect the image quality. Therefore, a dummy pattern may be used to reduce the optical difference, for example, that disclosed in Taiwanese utility model patent No. M359752. However, the proposed method still fails to completely solve this problem. Therefore, there is a need for a touch control panel structure having a dummy pattern that can solve the problems of the prior art.

### SUMMARY OF THE INVENTION

An objective of the present invention is to provide a touch control panel structure having a dummy pattern, which comprises a substrate, a plurality of first transparent conductive regions, a plurality of first dummy patterns, an insulating layer, a plurality of second transparent conductive regions, and an optical coating layer. The first transparent conductive regions and the first dummy patterns are disposed on the substrate, and are covered by the insulating layer. The second transparent conductive regions are disposed on the insulating layer and are covered by the optical coating layer. The first dummy patterns are respectively aligned with the corresponding second transparent conductive regions, and the first dummy patterns are disconnected from one another.

The first transparent conductive regions are arranged in a first direction, and the second transparent conductive regions are arranged in a second direction. The first direction is, for example, an ordinate direction, and the second direction is, for example, an abscissa direction which is perpendicular to the ordinate direction.

When light is emitted from the bottom of the substrate, it can pass through the first transparent conductive regions, and the first dummy patterns as well as their corresponding second transparent conductive regions, which can advantageously reduce the color difference so that the first and second transparent conductive regions cannot be visually distinguished. Therefore, the display image quality of the touch control panel can be improved.

Another objective of the present invention is to provide a touch control panel structure having a dummy pattern, which further comprises a plurality of second dummy patterns. The second transparent conductive regions and the second dummy patterns are disposed on the insulating layer, and are covered by the optical coating layer. The first and second transparent conductive regions are respectively arranged in a first direction and a second direction. The first and second dummy patterns are respectively aligned with the corresponding second and first transparent conductive regions.

When light is emitted from the bottom of the substrate, it can pass through the first transparent conductive regions as well as their corresponding second dummy patterns, and the first dummy patterns as well as their corresponding second transparent conductive regions, which can also reduce the color difference so that the first and second transparent conductive regions cannot be visually distinguished.

The first and second dummy patterns can respectively comprise a plurality of first and second dummy pattern units which are uniformly disposed. Each of the first and second dummy pattern units can be in a square, rectangular, or lozenge shape. Moreover, the first dummy patterns or the second dummy patterns can only have one single unit which is in a square, rectangular or lozenge shape.

### BRIEF DESCRIPTION OF THE DRAWINGS

The present invention will be apparent to those skilled in the art by reading the following detailed description of a preferred embodiment thereof, with reference to the attached drawings, in which:

FIG. 1 is a schematic view showing a touch control panel structure having a dummy pattern according to the present invention;

FIG. 2 is a schematic view showing the first transparent conductive regions and the first dummy patterns according to one embodiment of the present invention;

FIG. 3 is an enlarged view showing the first dummy patterns according to an embodiment of the present invention;

FIG. 4 is a schematic view showing a touch control panel structure according to another embodiment of the present invention; and

FIG. 5 is a schematic view showing a touch control panel structure according to another embodiment of the present invention.

### DETAILED DESCRIPTION OF THE PREFERRED EMBODIMENTS

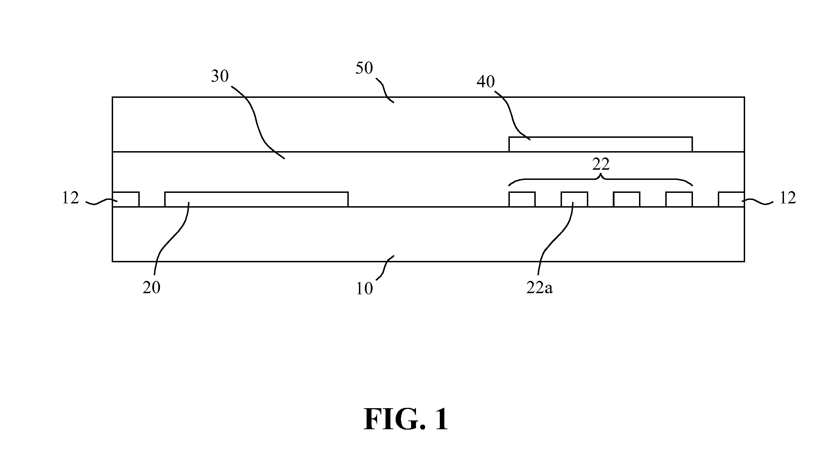

FIG. 1 is a schematic view showing a touch control panel structure having a dummy pattern according to the present invention. The touch control panel structure comprises a substrate 10, a mask layer 12, a plurality of a first transparent conductive regions 20, a plurality of first dummy patterns 22, an insulating layer 30, a plurality of second transparent conductive regions 40, a plurality of second dummy patterns 42, and an optical coating layer 50 for reducing a visual distinction between the first and second transparent conductive regions. In other words, when light is emitted upward from the bottom of the substrate, the transmitted light can be less affected by the first and second transparent conductive regions, and thereby the display image quality can be improved.

The substrate 10 is transparent. The mask layer 12 is made of an opaque material, for example a black material. The mask layer 12 can block light emitted from a display device (not shown) underneath the substrate 10. Moreover, the mask layer 12 has a masking pattern through which the substrate 10 is partially exposed.

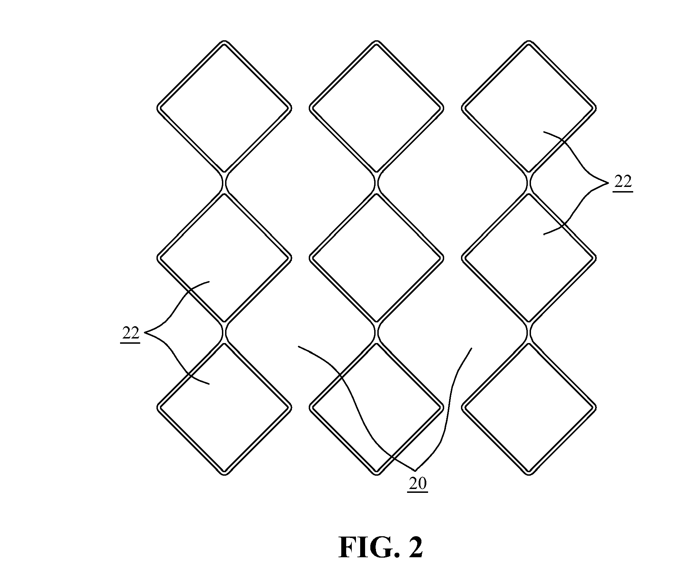

The first transparent conductive layer 20 and the first dummy patterns 22 are made of a transparent conductive material, such as indium tin oxide (ITO) or aluminum zinc oxide (AZO). The first transparent conductive regions 20 are disposed on one part of the substrate 10. The first dummy patterns 22 are disposed on another part of the substrate 10. The first transparent conductive regions 20 are arranged in a first direction, such as in an ordinate direction. Each first transparent conductive region comprises a plurality of the first transparent conductive units which are, for example, in a rectangular, square or lozenge shape, and each first transparent conductive unit is connected at two diagonally opposite corners thereof to an adjacent first transparent conductive unit. In FIG. 2, the first transparent conductive regions 20 are, for example, in a square shape, and the first dummy patterns 22 are not connected one another.

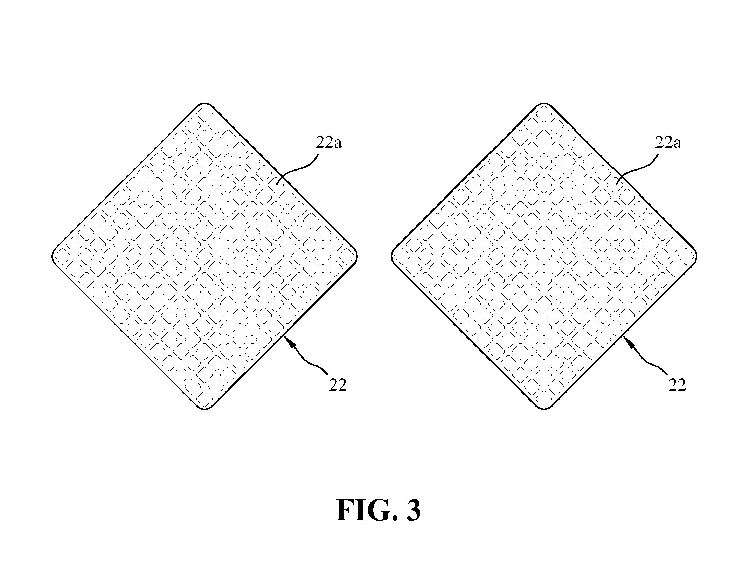

Each first dummy pattern 22 comprise a plurality of first dummy pattern units 22a which are, for example, in a rectangular, square, lozenge triangular, polygonal or irregular shape. FIG. 3 is an enlarged view of the first dummy pattern, in which the first dummy pattern units 22a are exemplarily in a square shape.

The insulating layer 30 is transparent and electrically insulating. The insulating layer 30 covers the mask layer 12, the first transparent conductive regions 20, the first dummy patterns 22, and the substrate 10 uncovered by the mask layer 12, the first transparent conductive regions 20 and the first dummy patterns 22.

The second transparent conductive regions 40 are made of the same transparent conductive material as that of the first transparent conductive regions 20. The second transparent conductive regions 40 are disposed on a portion of the insulating layer 30, and are arranged in a second direction different from the first direction, and the second direction is, for example, the abscissa direction. Just as the first transparent conductive region 20 described above, each second transparent conductive region 40 comprises a plurality of the second transparent conductive units which are, for example, in a rectangular, square or lozenge shape, and each second transparent conductive unit is connected at two diagonally opposite corners thereof to an adjacent second transparent conductive unit. Moreover, each second transparent conductive region 40 is aligned vertically with the corresponding first dummy pattern 22.

It is noted that an angle defined between the first direction and the second direction is between 30 degrees and 90 degrees.

The optical coating layer 50 is transparent and electrically insulating. The optical coating layer 50 covers the second transparent conductive regions 40 and the insulating layer 30 uncovered by the second transparent conductive regions 40.

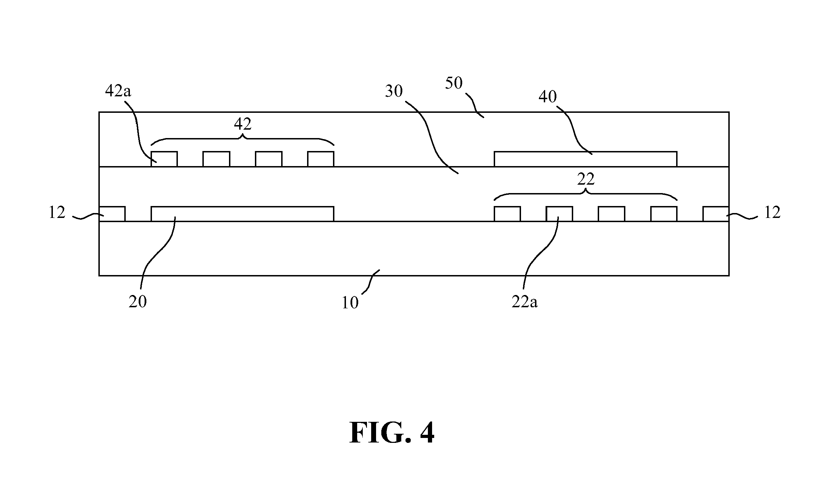

FIG. 4 is a schematic view showing another embodiment of a touch control panel structure of the present invention. The touch control panel structure can further comprise a plurality of the second dummy patterns 42 that are made of the same transparent conductive material as that of the second transparent conductive regions 40. The second dummy patterns 42 are disposed on a portion of the insulating layer 30, and are covered with the optical coating layer 50. Each second dummy pattern 42 is vertically aligned with the corresponding first transparent conductive regions 20. Each second dummy pattern 42 comprises a plurality of second dummy pattern units 42a which are in a rectangular, square, lozenge, triangular, polygonal or irregular shape, as the first dummy pattern units 22a.

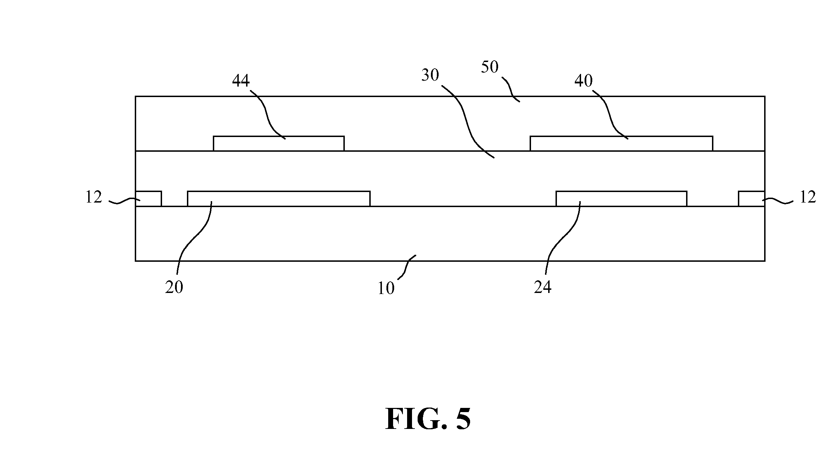

FIG. 5 is a schematic view showing a touch control panel structure according to another embodiment of the present invention. Each first dummy pattern 22 only has one single first dummy unit 24 which is in a lozenge shape. The first dummy pattern 24 is not larger than the second transparent conductive region 40. Each second dummy pattern 42 only has one single second dummy unit 44 which is in a lozenge shape that is not larger than the first transparent conductive region 20.

The feature of the touch control panel structure according to the present invention is that when light is emitted upward from the bottom of the substrate, it can pass through the first dummy pattern and the second transparent conductive regions aligned therewith, so that the transmitted light can be less affected by the second transparent conductive regions, and thereby the display image quality can be improved.

Furthermore, the other feature of the touch control panel structure according to the present invention is that because the first and second dummy patterns are respectively in alignment with the first and second transparent conductive regions, the first and second transparent conductive regions are visually indistinguishable from each other, and thereby the display image quality can be improved.

The foregoing description is intended to only provide illustrative ways of implementing the present invention, and should not be construed as limitations to the scope of the present invention. While the foregoing is directed to embodiments of the present invention, other and further embodiments of the invention may thus be devised without departing from the basic scope thereof, and the scope thereof is determined by the claims that follow.

## Claims

1. A touch control panel structure comprising:
a transparent substrate;
a mask layer made of an opaque material, the mask layer blocking light emitted from a display device underneath the substrate, the mask layer having a mask pattern through which a portion of the substrate is exposed;
a plurality of first transparent conductive regions made of a transparent conductive material, the first transparent conductive regions being disposed on a portion of the substrate and arranged in a first direction, each first transparent conductive region comprising a plurality of the first transparent conductive units which are in a rectangular, square or lozenge shape, each first transparent conductive unit being connected at two diagonally opposite corners thereof to an adjacent first transparent conductive unit;
a plurality of first dummy patterns made of a transparent conductive material, the first dummy patterns being disposed on another portion of the substrate, the first dummy patterns being disconnected from one another;
a transparent insulating layer covering the mask layer, the first transparent conductive regions, the first dummy patterns, and a surface of the substrate uncovered by the mask layer, the first transparent conductive regions and the first dummy patterns;
a plurality of second transparent conductive regions made of the transparent conductive material, the second transparent conductive regions being disposed on a portion of the insulating layer and arranged in a second direction different from the first direction, each second transparent conductive region comprises a plurality of the second transparent conductive units which are in a rectangular, square or lozenge shape, each second transparent conductive unit being connected at two diagonally opposite corners thereof to an adjacent second transparent conductive unit, each second transparent conductive unit being disposed in a vertical alignment with the first dummy patterns; and
an optical coating layer being transparent and electrically insulating, the optical coating layer covering the second transparent conductive regions, and the transparent insulating layer uncovered by the second transparent conductive regions.

2. The touch control panel structure of claim 1, wherein an angle between the first and second directions is between 30 degrees and 90 degrees.

3. The touch control panel structure of claim 1, further comprising a plurality of second dummy patterns made of the transparent conductive material, the second dummy patterns being disposed on another portion of the insulating layer and covered by the optical coating layer, each second dummy patterns being vertically aligned with the first transparent conductive regions.

4. The touch control panel structure of claim 1, wherein each first dummy patterns comprises a plurality of first dummy pattern units which are in a rectangular, square, lozenge, triangular, polygonal or irregular shape.

5. The touch control panel structure of claim 1, wherein each first dummy pattern has one single first dummy unit in a lozenge shape that is not larger than the second transparent conductive region.

6. The touch control panel structure of claim 3, wherein each second dummy patterns comprises a plurality of second dummy pattern units which are in rectangular, square, lozenge, triangular, polygonal, or irregular shape.

7. The touch control panel structure of claim 3, wherein each second dummy pattern has one single second dummy unit in a lozenge shape that is not larger than the first transparent conductive region.

8. The touch control panel structure of claim 1, wherein the transparent conductive material comprises indium tin oxide or aluminum zinc oxide.
